## Europäisches Patentamt

## European Patent Office

## Office européen des brevets

(11) Veröffentlichungsnummer: **0 232 518**
**A2**

(12) # EUROPÄISCHE PATENTANMELDUNG

(21) Anmeldenummer: **86117336.7**

(22) Anmeldetag: **12.12.86**

(51) Int. Cl.⁴: **G 06 F 12/06**

(30) Priorität: **13.01.86 DE 3600744**

(43) Veröffentlichungstag der Anmeldung: **19.08.87**
**Patentblatt 87/34**

(84) Benannte Vertragsstaaten: **AT BE CH DE ES FR GB IT LI NL SE**

(71) Anmelder: **Siemens Aktiengesellschaft Berlin und München, Wittelsbacherplatz 2, D-8000 München 2 (DE)**

(72) Erfinder: **Pfeifer, Klaus, Dr.-Phys., St.Egidistrasse 27, D-8031 Gilching (DE)**
Erfinder: **Kosler, Wolfgang, Dipl.-Ing., Aichacherstrasse 24, D-8000 München 70 (DE)**
Erfinder: **Trimpop, Gerd, Stobaustrasse 40, D-8190 Wolfratshausen (DE)**
Erfinder: **Paulmichl, Erich, Dipl.-Ing., Am Würmufer 9, D-8035 Gauting (DE)**

(54) Verfahren und Anordnung zum Bilden von Adressen zum Ansteuern eines Arbeitsspeichers.

(57) Ausgehend von einem bekannten Verfahren und einer Einrichtung zur Erweiterung des Adressenumfangs (AEE) zum Ansteuern eines Arbeitsspeichers (AS) durch ein zentrales Steuerwerk (ZStW) eines Vermittlungssystems wird in einem Vergleicher (V) festgestellt, ob sich die Adreßinformationen der höherwertigen Adreßleitungen (HAL) oder Adreßregister (AR) der Einrichtung zum Erweitern des Adressenumfangs (AEE) des vorhergehenden Arbeitsspeicherzugriffs gegenüber dem aktuellen Arbeitsspeicherzugriff ändern. Liegt Übereinstimmung vor, wird der im vorhergehenden Arbeitsspeicherzugriff in einem Adreßregisterspeicher (ARS) gespeicherte höherwertige Teil der Arbeitsspeicheradresse sofort zum Bilden der Gesamtarbeitsspeicheradresse benutzt.

0232518

Siemens Aktiengesellschaft      Unser Zeichen
Berlin und München              VPA  86 P 1 0 0 7 E

Verfahren und Anordnung zum Bilden von Adressen zum Ansteuern eines Arbeitsspeichers

Die Erfindung betrifft ein Verfahren zum Bilden von Adressen zum Ansteuern eines Arbeitsspeichers eines programmgesteuerten Vermittlungssystems, welches ein zentrales Steuerwerk und eine Einrichtung zum Erweitern des Adressenumfangs (Erweiterungseinrichtung) umfaßt und diese Vermittlungssystem-Komponenten über einen Datenbus bzw. ein Datenleitungsbündel, einen Steuerbus bzw. ein Steuerleitungsbündel und einen Statusbus bzw. ein Statusleitungsbündel verbunden sind und mindestens $2 \leq n \leq 4$ der höherwertigen Adreßleitungen vom zentralen Steuerwerk zur Erweiterungseinrichtung geführt werden und diese Einrichtung Adreßregister aufweist, deren Anzahl maximal der möglichen Binärcode-Kombinationen der angeschlossenen höherwertigen Adreßleitungen entspricht und die Adreßregister mindestens $n + 1$ Speicherplätze enthalten und jedem Speicherplatz des angesteuerten Adreßregisters eine Adreßleitung zugeordnet wird und die am Ausgang der Erweiterungseinrichtung vorliegenden mindestens $n + 1$ höherwertigen Adreßleitungen zusammen mit den vom zentralen Steuerwerk kommenden niederwertigen Adreßleitungen ein erweitertes Adreßleitungsbündel bilden und mit dem Arbeitsspeicher verbunden sind und die Adreßregister über das Datenleitungsbündel vom zentralen Steuerwerk die Adreßinformationen erhalten, wobei die Adreßregister nur bei Wechsel der vom zentralen Steuerwerk angesprochenen und definierten Arbeitsspeicherbereiche aktualisiert werden.

28.11.1985 / Rul 1 Kly

Bei diesem durch die Druckschrift TTL-Databook, Bd. 1 (1981), Seite 7-622 von Texas Instruments bekannten Verfahren ist eine Erweiterungseinrichtung eingesetzt, die ein von einem Mikroprozessor kommendes Adreßleitungsbündel um maximal acht Adreßleitungen erweitert. Hierzu werden maximal vier der höherwertigen Adreßleitungen des Mikroprozessors nicht direkt mit dem Arbeitsspeicher, sondern mit der Erweiterungseinrichtung verbunden; höherwertige Adreßleitungen stellen diejenigen Adreßleitungen dar, die die höchsten Binärwerte innerhalb des gesamten Adreßleitungsbündels repräsentieren. Die in den maximal vier höherwertigen Adreßleitungen enthaltene Binärcode-Kombination bestimmt jeweils ein Register in der Erweiterungseinrichtung. Bei einer Maximalerweiterung auf das größtmögliche Adreßleitungsbündel wird jedem der zwölf Speicherplätze des bestimmten Adreßregisters eine Adreßleitung zugeordnet. Die aktuellen Adreßregisterinformationen werden vor dem folgenden Arbeitsspeicherzugriff vom zentralen Steuerwerk über die Datenleitungen zur Erweiterungseinrichtung übermittelt. Ein erneutes Übermitteln der Adreßregisterinformationen vor dem folgenden Arbeitsspeicherzugriff ist nur dann nötig, wenn vom zentralen Steuerwerk ein anderer Arbeitsspeicherbereich, der nicht durch die vorhergehende Adreßregisterinformation repräsentiert wurde, angesprochen wird. Die direkt vom zentralen Steuerwerk kommenden niederwertigen Adreßleitungen bilden zusammen mit den von der Erweiterungseinheit herangeführten Adreßleitungen ein erweitertes Adreßleitungsbündel. Aufgrund des erweiterten Adreßleitungsbündels kann der dem zentralen Steuerwerk zugeordnete Arbeitsspeicher vergrößert werden.

Im vorliegenden Verfahren ist bei jedem Arbeitsspeicherzugriff des zentralen Steuerwerks die Erweiterungseinrichtung mit einbezogen, d. h. bei jedem Arbeitsspeicherzugriff laufen die eingangs beschriebenen Verarbeitungsschritte ab. Dieses bedeutet eine erhöhte Speicherzugriffszeit aufgrund der Verarbeitungszeiten innerhalb der Erweiterungs-

0232518

einrichtung, auch dann, wenn der höherwertige, erweiterte Teil der Adreßleitungs-Informationen und damit der angesprochene Speicherbereich gleich bleibt.

Der Erfindung liegt die Aufgabe zugrunde, die Zugriffszeit des zentralen Steuerwerks zum Arbeitsspeicher unter Beibehaltung des Adressen-Erweiterungsverfahrens für den Fall zu reduzieren, bei dem der höherwertige und damit erweiterte Teil der Adreßleitungs-Information unverändert bleibt. Diese Aufgabe wird ausgehend von dem eingangs beschriebenen Verfahren durch die verfahrenskennzeichnenden Merkmale des Anspruchs 1 gelöst.

Für den Fall, daß keine Übereinstimmung vorliegt, d. h. stimmt der höherwertige Teil der Arbeitsspeicheradresse des vorhergehenden und des aktuellen Arbeitsspeicherzugriffs nicht überein oder ändern sich die Adreßregisterinformationen, leitet der Vergleicher das eingangs erläuterte und bekannte Adressenbildungsverfahren ein.

Der Vorteil des erfindungsgemäßen Verfahrens liegt insbesondere darin, daß bei einem Arbeitsspeicherzugriff, bei dem derselbe Bereich des Arbeitsspeichers - wird durch den höherwertigen Teil der Arbeitsspeicheradresse bestimmt - wie beim vorhergehenden Arbeitsspeicherzugriff adressiert wird, sich die Arbeitsspeicherzugriffszeit wesentlich verkürzt. Da in der Vermittlungstechnik das Bearbeiten von Tabellen häufig auftritt, wird mit einer Wahrscheinlichkeit von über 60 % bei zwei aufeinanderfolgenden Arbeitsspeicherzugriffen derselbe Arbeitsspeicherbereich adressiert bzw. bleibt der höherwertige Teil der Arbeitsspeicheradresse unverändert. Somit wird durch das erfindungsgemäße Verfahren auch eine im Durchschnitt wesentlich kürzere Arbeitsspeicherzugriffszeit erreicht.

Die im Unteranspruch genannten Vergleicher, der Adreßregisterspeicher und der Signalspeicher sind Anordnungskomponenten, die zur Durchführung des erfindungsgemäßen Verfahrens zusätzlich zu dem im Anspruch 1 festgelegten zentralen Steuerwerk, der Erweiterungseinrichtung und des Arbeitsspeichers angeordnet sind.

Hierbei wird der höherwertige Teil einer vom zentralen Steuerwerk im vorhergehenden Arbeitsspeicherzugriff gebildeten Arbeitsspeicheradresse im Vergleicher gespeichert und beim folgenden Arbeitsspeicherzugriff mit dem aktuellen höherwertigen Teil der Arbeitsspeicheradresse verglichen. Der während des vorhergehenden Arbeitsspeicherzugriffs von der Erweiterungseinrichtung abgegebene höherwertige und erweiterte Teil der Arbeitsspeicheradresse wird im Adreßregisterspeicher gespeichert. Während des folgenden Arbeitsspeicherzugriffs wird mit diesem gespeicherten, höherwertigen Teil der Arbeitsspeicheradresse zusammen mit dem niederwertigen Teil der Arbeitsspeicheradresse die gesamte Arbeitsspeicheradresse gebildet, sofern im Vergleicher der höherwertige Teil der Arbeitsspeicheradresse des aktuellen und des vorhergehenden Speicherzugriffs übereinstimmt und die Adreßregisterinformation sich nicht ändert. Die Änderung der Adreßregisterinformationen wird dem Vergleicher über die Statusleitungen vom zentralen Steuerwerk mitgeteilt.

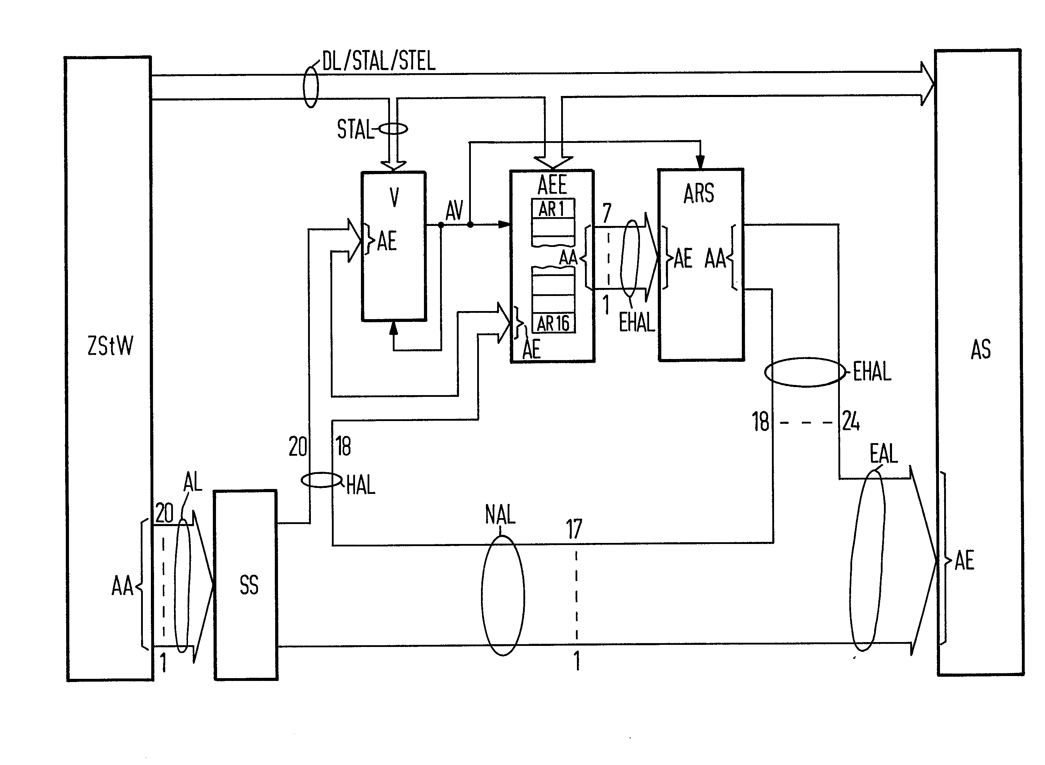

Im folgenden wird ein Ausführungsbeispiel der Erfindung anhand der Zeichnung näher erläutert.

Die Zeichnung zeigt die zur Erläuterung notwendigen Systemkomponenten eines digitalen Fernmeldevermittlungssystems. Ein zentrales Steuerwerk ZStW bzw. ein Mikroprozessor verarbeitet maximal 16 Bit-Datenwörter und kann maximal einen Arbeitsspeicher AS von einem Megabyte über 20 Adreßausgänge

und Adreßleitungen AL ($2^{20}$ Adressen) im Binärcode adressieren. Ein zentrales Steuerwerk ZStW mit diesen Eigenschaften stellt beispielsweise der Mikroprozessor SAB 8086 dar. Die Aufgabe des zeitgerechten Durchschaltens der über die Adreßleitungen AL herangeführten Adreßinformation an die nachfolgenden Systemkomponenten übernimmt ein dem zentralen Steuerwerk ZStW nachgeschalteter Signalspeicher SS. Dieser Signalspeicher SS kann beispielsweise mittels eines bekannten, integrierten Schaltkreises der Advanced Low Power-Schottky Serie (ALS-Serie) mit der Bezeichnung ALS 580 gebildet werden. Die 17 niederwertigen Adressenausgänge AA des Signalspeichers SS und die 17 niederwertigen Adresseneingänge AE eines Arbeitsspeichers AS verbinden ein Adreßleitungsbündel AL. Die drei höherwertigen Adreßleitungen HAL werden parallel einem Vergleicher V und einer Einrichtung zur Erweiterung des Adressenumfangs AEE (Erweiterungseinrichtung) zugeführt. Der Vergleicher V, mit integrierten Schaltkreisen der ALS-Serie mit der Bezeichnung ALS 521 realisiert, vergleicht die aktuelle Adreßinformation der höherwertigen Adreßleitungen HAL mit der des vorhergehenden Speicherzugriffs. Zusätzlich teilt das zentrale Steuerwerk ZStW über das Statusleitungsbündel STAL, das auch mit dem Adreßregisterspeicher ARS und dem Arbeitsspeicher AS verbunden wird, dem Vergleicher V mit, ob ein Wechsel der Adreßregisterinformationen in der Erweiterungseinrichtung AEE zwischen dem aktuellen und dem vorhergehenden Arbeitsspeicherzugriff stattfand. Blieben sowohl Adreßregisterinformationen als auch Adreßleitungsinformation der drei höherwertigen Adreßleitungen HAL unverändert, so informiert der Vergleicher V über seinen Steuerausgang AV den Adreßregisterspeicher ARS und leitet das sofortige Bilden der gesamten Arbeitsspeicheradresse ein. Die im Adreßregisterspeicher ARS je Register 7 (maximal 12) Speicherplätze enthaltene und gespeicherte Adreßinformation gelangt an sieben (maximal 12) Ausgänge AA des Adreßregisterspeichers ARS und wird über 7 (maximal 12) höherwertige Adreßleitungen AL bzw. ein erweitertes Adreßleitungsbündel EHAL den höherwertigen Adreßeingängen AE des Arbeitsspeichers AS zugeführt und bildet somit zusammen mit dem niederwertigen Adreßleitungsbündel NAL ein gemeinsames, erweitertes Adreßleitungsbündel EAL mit 24 Adreßleitungen AL, die eine gesamte Adressierkapazität von $2^{24}$ Adressen aufweisen bzw. einen Arbeitsspeicher AS von 16 Megabyte adressieren können.

Ändert sich die Adreßleitungsinformation des aktuellen Arbeitsspeicherzugriffs gegenüber den vorhergehenden, oder ändert sich die Adreßregisterinformation in der Erweiterungseinrichtung AEE, so stellt dies der Vergleicher V fest und informiert über seinen Steuerausgang AV die Erweiterungseinrichtung AEE und leitet das bekannte Bilden der Arbeitsspeicheradresse über die Erweiterungseinrichtung AEE ein. Die empfangene, binärcodierte Adreßleitungsinformation der drei höherwertigen Adreßleitungen HAL wird in der Erweiterungseinrichtung AEE decodiert, wodurch ein Adreßregister AR aus maximal 16 vorhandenen Adreßregistern AR bestimmt wird. Die Adreßregisterinformationen werden vom zentralen Steuerwerk ZStW über das Datenleitungsbündel DL an die Erweiterungseinrichtung AEE übermittelt und dort in das entsprechende Adreßregister AR eingefügt. Um eine erweiterte Arbeitsspeicheradresse bzw. ein erweitertes Adreßleitungsbündel EHAL bilden zu können, muß mindestens ein Speicherplatz mehr je Adreßregister AR mit Adreßregisterinformation belegt sein, als höherwertige Adreßleitungen HAL an den Adreßeingängen AE der Erweiterungseinrichtung AEE vorliegen. Jeder Speicherstelle des bestimmten Adreßregisters AR wird ein Adressenausgang AA der Erweiterungseinrichtung AEE zugeordnet, wobei die Adressenausgänge AA mit den Adresseneingängen AE des Adreßregisterspeichers ARS
verbunden sind. Der Adreßregisterspeicher ARS speichert
die an den Adreßeingängen AE anliegenden Informationen und
gibt sie gleichzeitig über die Adreßausgänge AA für erweiterte, höherwertige Adreßleitungen EHAL zusammen mit den
Informationen der vom Signalspeicher SS herangeführten niederwertigen Adreßinformationen an den Arbeitsspeicher AS
weiter. Die Erweiterungseinrichtung AEE wird ebenfalls
mit einem integrierten Schaltkreis der ALS-Serie mit der
Bezeichnung ALS 610 aufgebaut.

Das zentrale Steuerwerk ZStW steuert die Systemkomponenten im Arbeitsspeicher AS und die Erweiterungseinrichtung
AEE über in Mikroprozessorsystemen üblicherweise angeordnete Datenleitungsbündel DL, Statusleitungsbündel STAL
und Steuerleitungsbündel STEL.

Patentansprüche

1. Verfahren zum Bilden von Adressen zum Ansteuern eines Arbeitsspeichers eines programmgesteuerten Vermittlungssystems, welches ein zentrales Steuerwerk und eine Einrichtung zum Erweitern des Adressenumfangs (Erweiterungseinrichtung) umfaßt und diese Vermittlungssystem-Komponenten über einen Datenbus bzw. ein Datenleitungsbündel, einen Steuerbus bzw. ein Steuerleitungsbündel und einen Statusbus bzw. ein Statusleitungsbündel verbunden sind und mindestens $2 \leq n \leq 4$ der höherwertigen Adreßleitungen vom zentralen Steuerwerk zur Erweiterungseinrichtung geführt werden und diese Einrichtung Adreßregister aufweist, deren Anzahl maximal der möglichen Binärcode-Kombinationen der angeschlossenen höherwertigen Adreßleitungen entspricht und die Adreßregister mindestens $n + 1$ Speicherplätze enthalten und jedem Speicherplatz des angesteuerten Adreßregisters eine Adreßleitung zugeordnet wird und die am Ausgang der Erweiterungseinrichtung vorliegenden mindestens $n + 1$ höherwertigen Adreßleitungen zusammen mit den vom zentralen Steuerwerk kommenden niederwertigen Adreßleitungen ein erweitertes Adreßleitungsbündel bilden und mit dem Arbeitsspeicher verbunden sind und die Adreßregister über das Datenleitungsbündel vom zentralen Steuerwerk die Adreßinformationen erhalten, wobei die Adreßregister nur bei Wechsel der vom zentralen Steuerwerk angesprochenen und definierten Arbeitsspeicherbereiche aktualisiert werden, d a d u r c h g e -
k e n n z e i c h n e t , daß der beim jeweils vorhergehenden Arbeitsspeicherzugriff von der Erweiterungseinrichtung (AEE) abgegebene höherwertige Teil der Arbeitsspeicheradresse gespeichert wird, daß die beim vorhergehenden Arbeitsspeicherzugriff die in den höherwertigen Adreßleitungen (HAL) enthaltene Binärkombination gespeichert wird und beim folgenden Arbeitsspeicherzugriff die aktuelle Binärcode-Kombination

19.11.1985 / Rul 1 Kly

der höherwertigen Adreßleitungen (HAL) mit der vorhergehenden verglichen wird und daß bei Übereinstimmung das sofortige Bilden der Adresse für das Ansteuern des Arbeitsspeichers (AS) veranlaßt wird, worauf der gespeicherte höherwertige Teil der Arbeitsspeicheradresse und der über einen zum Zwecke des zeitgerechten Durchschaltens zwischengespeicherte niederwertige Teil der vom zentralen Steuerwerk (ZStW) gebildeten Arbeitsspeicheradresse zusammenfügt wird, sofern nicht eine Mitteilung des zentralen Steuerwerks (ZStW) über eine Änderung der Adreßregisterinformationen vorliegt.

2.     Anordnung zum Durchführen des Verfahrens nach Patentanspruch 1, d a d u r c h   g e k e n n z e i c h n e t , daß der Erweiterungseinrichtung (AEE) ein Adreßregister-Speicher (ARS) nachgeschaltet wird, daß die vom zentralen Steuerwerk kommenden Adreßleitungen (AL) über einen Signalspeicher (SS) geführt werden und anschließend die höherwertigen Adreßleitungen (HAL) sowohl zu einem Vergleicher (V) als auch zur Erweiterungseinrichtung (AEE) geschaltet werden und ein Steuerausgang (AV) des Vergleichers (V) mit einem Steuereingang (SE) der Erweiterungseinrichtung (AEE) und mit einem Steuereingang (SE) des Adreßregisterspeichers (ARS) verbunden ist und die mit dem zentralen Steuerwerk (ZStW) verbundenen Statusleitungen (STAL) zu Eingängen sowohl des Vergleichers (V) als auch des Adreßregisterspeichers (ARS) geführt werden.

AS

AE

EHAL

EAL

24

18

ARS

AE AA

AE

EHAL

7 1 EHAL

AEE

AR1 AA AR16

AE

AV

NAL

17 1

V

AE

STAL

DL/STAL/STEL

HAL

18

20

SS

AL

20 1

AA

ZStW